# EUROPEAN PATENT APPLICATION

(11) **EP 1 853 049 A1**
(43) Date of publication of application: **07.11.2007**
(21) Application number: 07104695.7
(22) Date of filing: 22.03.2007
(51) Int. Cl.: H04L 29/08, B60R 25/00, E05B 65/20, G07C 9/00

(54) **Radio communication system and method therefor and portable radio communication unit and method therefor**

(30) Priority: 23.03.2006 JP 2006081260
(71) Applicant: OMRON Corporation, a corporation of Japan, Shiokoji-dori, Shimogyo-ku Kyoto-shi Kyoto 600-8530 (JP)
(72) Inventor: Kashiyama, Masato, Kyoto-shi Kyoto 600-8530 (JP); Ueda, Yusuke, Kyoto-shi Kyoto 600-8530 (JP)
(74) Representative: Brykman, Georges

(57) **Abstract**

The invention is to achieve normal authentication communication. For example, upon reception of a request from an ECU, a portable electronic key sends information on the presence or absence of another electronic key (YES in S31, S32) to try to receive it. When the portable electronic key receives information on the presence or absence of another electronic key from another portable electronic key in addition to information on the presence or absence of another electronic key from itself (YES in S33), the portable electronic key determines that a plurality of portable electronic keys including itself are present in the communication range of the ECU, and executes the following processes. Specifically, the portable electronic key generates random numbers, determines a response delay time on the basis of the random numbers, and sends an answer to the ECU after a lapse of the response delay time (S34 to S36). The invention can be applied to a vehicle anti-theft system.

## Description

### BACKGROUND OF THE INVENTION

### Technical Field

The present invention relates to a radio communication system and a method therefor and a portable radio communication unit and a method therefor, and in particular, it relates to a radio communication system and a method therefor which can achieve normal authentication communication even if a plurality of portable radio communication units are present in the communication range of a fixed radio communication unit, and the portable radio communication units and a method therefor.

### Background Art

Known vehicle anti-theft systems include an electronic control unit (ECU) mounted to a vehicle and a portable electronic key that the user who drives the vehicle carries (for example, refer to JP-A-2003-20835 and JP-A-09-279917).

In this case, the ECU communicates with the portable electronic key for authentication, and upon succeeding in authentication, the ECU executes a necessary process for unlocking the door of the vehicle or starting the engine.

However, a plurality of portable electronic keys are sometimes provided for one vehicle (ECU) as spares or for other users in recent years. In such a case, when a plurality of portable electronic keys are present in the communication range of the ECU, such as when one user comes close to the vehicle while carrying a plurality of portable electronic keys or when a plurality of users each having a portable electronic key comes close to the vehicle at the same time, the following problem will occur.

In authentication communication between an ECU and a portable electronic key, a specified transmission frame is sent as an answer of the portable electronic key to the request of the ECU. Accordingly, when there is a plurality of portable electronic keys in the communication range of the ECU, the radio waves of the transmission frames from the portable electronic keys will collide with one another in the ECU. This results in the problem of interfering normal authentication communication, or normal communication.

Such a problem may occur not only in a vehicle anti-theft system but also in all radio communication systems in which a specified one of a plurality of portable radio communication units is authenticated by a fixed radio communication unit.

### SUMMARY OF THE INVENTION

The present invention has been made in consideration of such circumstances, and is configured to achieve normal authentication communication even if a plurality of portable radio communication units is present in the communication range of a fixed radio communication unit.

A radio communication system and a method therefor according to an aspect of the present invention are a radio communication system and a method in which a specified one of a plurality of portable radio communication units is authenticated by a fixed radio communication unit. The fixed radio communication unit sends a request for authentication. Each of one or more of the plurality of portable radio communication units that have received the request transmits presence information for determining whether another portable radio communication unit that has received the request is present. When it is determined that only the presence information of itself was received, each portable radio communication unit sends an answer to the request to the fixed radio communication unit. When it is determined that not only the presence information of itself but also presence information from another portable radio communication unit were received, each portable radio communication unit sets a response delay time by a specified setting method, and after a lapse of the response delay time, an answer to the request is sent to the fixed radio communication unit. When the fixed radio communication unit received the answer from at least one of the one or more portable radio communication units that have received the request, the fixed radio communication unit authenticates the portable radio communication unit that has sent the answer.

The fixed radio communication unit is an ECU mounted to a vehicle, for example. The portable radio communication unit is a portable electronic key carried by a user who drives the vehicle, for example.

Thus, even if a plurality of portable radio communication units are present in the communication range of the fixed radio communication unit, the portable radio communication units mutually recognize it, and stagger the transmission timings of the answers. Accordingly, no radio wave collision occurs in the fixed radio communication unit, thus allowing normal authentication communication.

A portable radio communication unit according to an aspect of the invention is a specified one of N (N is an integer larger than or equal to 2) portable radio communication units authenticated by a fixed radio communication unit. The portable radio communication unit includes: first receiving means configured to receive a request for authentication sent from the fixed radio communication unit; first generating means configured to generate an answer to the request received by the first receiving means; first transmitting means configured to send the answer generated by the first generating means to the fixed radio communication unit; second generating means configured to generate presence information for determining the presence or absence of another portable radio communication unit that has received the request when the request is received by the first receiving means; second transmitting means configured to transmit presence information generated by the second generating means; second receiving means configured to receive the presence information; and transmission control means configured to control transmission in such a manner that when only the presence information sent from the second transmitting means was received by the second receiving means, the answer is sent from the first transmitting means to the fixed radio communication unit, and when not only the presence information sent from the second transmitting means but also presence information from another portable radio communication unit were received by the second receiving means, a response delay time is set by a specified setting method, wherein when the response delay time has elapsed, the answer is sent from the first transmitting means to the fixed radio communication unit.

The fixed radio communication unit is an ECU mounted to a vehicle, for example. The portable radio communication unit is a portable electronic key carried by a user who drives the vehicle, for example.

The first receiving means, for example, includes an LF receiver circuit. The first transmitting means, for example, includes a UHF transmitter circuit. The second receiving means, for example, includes an LF receiver circuit. The second transmitting means, for example, includes a UHF or LF transmitter circuit. The second receiving means, for example, includes a UHF or LF receiver circuit. The first generating means, the second generating means, and the transmission control means include signal processing circuits, a computer that executes signal processing as software, and the like.

Thus, even if a plurality of portable radio communication units are present in the communication range of the fixed radio communication unit, the portable radio communication units mutually recognize it, and stagger the transmission timings of the answers. Accordingly, no radio wave collision occurs in the fixed radio communication unit, thus allowing normal authentication communication.

When the presence information sent from the second transmitting means is normally received by the second receiving means, the transmission control means may determine that only the presence information sent from the second transmitting means has been received; and otherwise, the transmission control means may determine that not only the presence information sent from the second transmitting means but also presence information sent from another portable radio communication unit were received by the second receiving means.

Thus, the transmission control means can be simplified. Specifically, when the transmission control means is a circuit, the circuit can be reduced in scale. When the detection means is a computer for executing software, the software can be reduced in size.

The fixed radio communication unit is mounted in a vehicle, and sends the request at a low frequency (LF). A plurality of the portable radio communication units are portable electronic keys for giving at least one of an instruction to unlock the door of the vehicle and an instruction to enable engine starting and send the answer at an ultra high frequency (UHF). The second transmitting means is a transmitter circuit for LF and sends the presence information at LF. The second receiving means and the first receiving means are configured by a common receiver circuit for LF, the common LF receiver circuit receiving the presence information or the request sent at LF. The first transmitting means is a transmitter circuit for UHF and can send the answer at UHF.

This eliminates the need for a new receiver circuit for receiving presence information.

The fixed radio communication unit is mounted in a vehicle, and sends the request at a low frequency (LF). A plurality of the portable radio communication units are portable electronic keys for giving at least one of an instruction to unlock the door of the vehicle and an instruction to enable engine starting, and send the answer at an ultra high frequency (UHF). The first receiving means is a receiver circuit for LF and receives the request sent at LF. The first transmitting means and the second transmitting means are configured by a common transmitter circuit for UHF, and transmit the presence information or the answer at UHF. The second receiving means is a receiver circuit for UHF and can receive the presence information sent at UHF.

This reduces the processing time until authentication communication is finished, thus speeding up the response of the entire system.

When the transmission control means determines that the presence information from another portable radio communication unit was also received by the second receiving means, the first generating means can generate the answer including information indicative of the presence of another portable radio communication unit.

Thus, the fixed radio communication unit that has received the answer can also easily recognize the presence of a plurality of portable radio communication units in its communication range.

A method for radio communication according to an aspect of the invention is for a specified one of a plurality of portable radio communication units to be authenticated by a fixed radio communication unit. Upon reception of a request for authentication sent from the fixed radio communication unit, presence information is sent for determining whether another portable radio communication unit that has received the request is present. When it is determined that only the presence information of itself was received, an answer to the request is sent to the fixed radio communication unit. When it is determined that not only the presence information of itself but also presence information from another portable radio communication unit were received, a response delay time is set by a specified setting method, and after a lapse of the response delay time, an answer to the request is sent to the fixed radio communication unit.

Thus, even if a plurality of portable radio communication units are present in the communication range of the fixed radio communication unit, the portable radio communication units mutually recognize it and stagger the answer transmission timings. Accordingly, no radio wave collision occurs in the fixed radio communication unit, thus allowing normal authentication communication.

The answer and the presence information may be the same. In this case, the first generating means and the second generating means may be the same. The first transmitting means and the second transmitting means may be the same. The first receiving means and the second receiving means may be the same. when an answer sent after a request has been received cannot be normally received by the portable electronic key that has sent the answer, a second answer may be sent after a lapse of a response delay time set by a specified setting method.

The present invention can achieve a radio communication system in which a specified one of a plurality of portable radio communication units is authenticated by a fixed radio communication unit. Particularly, in this radio communication system, even if a plurality of portable radio communication units are present in the communication range of the fixed radio communication unit, a normal authentication communication can be achieved.

Since the priority of portable electronic keys in the first authentication communication is not specified, when only one portable electronic key is present in the communication range, authentication can be made by the first communication, thus reducing the time. That is, the time for authentication can be reduced, and normal authentication communication can be achieved.

### BRIEF DESCRIPTION OF THE DRAWINGS

Fig. 1 is a diagram of a structural example of a vehicle anti-theft system as a radio communication system incorporating the invention.
Fig. 2 is a diagram illustrating the operation of a radio communication system by a data-collision detection method incorporating the invention.
Fig. 3 is a diagram illustrating the operation of the radio communication system by the data-collision detection method incorporating the invention.
Fig. 4 is a diagram illustrating a structural example of the transmission frame used in the data-collision detection method incorporating the invention.
Fig. 5 is a diagram illustrating structural examples of the transmission frame used in the data-collision detection method incorporating the invention.
Fig. 6 is a diagram illustrating the principle that an ECU detects a radio wave collision by the data-collision detection method incorporating the invention.
Fig. 7 is a diagram illustrating the principle that an ECU detects a radio wave collision by the data-collision detection method incorporating the invention.
Fig. 8 is a diagram illustrating the operation of the radio communication system by the data-collision detection method incorporating the invention.
Fig. 9 is a diagram illustrating the operation of the radio communication system by the data-collision detection method incorporating the invention.
Fig. 10 is a flowchart of an example of the process of the ECU by the data-collision detection method incorporating the invention.
Fig. 11 is a flowchart of an example of the process of the portable electronic key by the data-collision detection method incorporating the invention.
Fig. 12 is a flowchart of a concrete example of the relationship between the processes of Figs. 10 and 11.
Fig. 13 is a flowchart of a concrete example of the relationship between the processes of Figs. 10 and 11.
Fig. 14 is a diagram illustrating the operation of a radio communication system by an advance regulation method incorporating the invention.
Fig. 15 is a diagram illustrating the operation of the radio communication system by the advance regulation method incorporating the invention.
Fig. 16 is a flowchart of an example of the process of the ECU by the advance regulation method incorporating the invention.
Fig. 17 is a flowchart of an example of the process of the portable electronic key by the advance regulation method incorporating the invention.
Fig. 18 is a flowchart of a concrete example of the relationship between the processes of Figs. 16 and 17.
Fig. 19 is a block diagram of a structural example of an ECU as a fixed radio communication unit incorporating the invention.
Fig. 20 is a block diagram of a structural example of a portable electronic key as portable radio communication unit incorporating the invention.
Fig. 21 is a block diagram of another hardware structure of all or part of a fixed radio communication unit incorporating the invention or all or part of a portable radio communication unit incorporating the invention.

### DESCRIPTION OF THE PREFERRED EMBODIMENTS

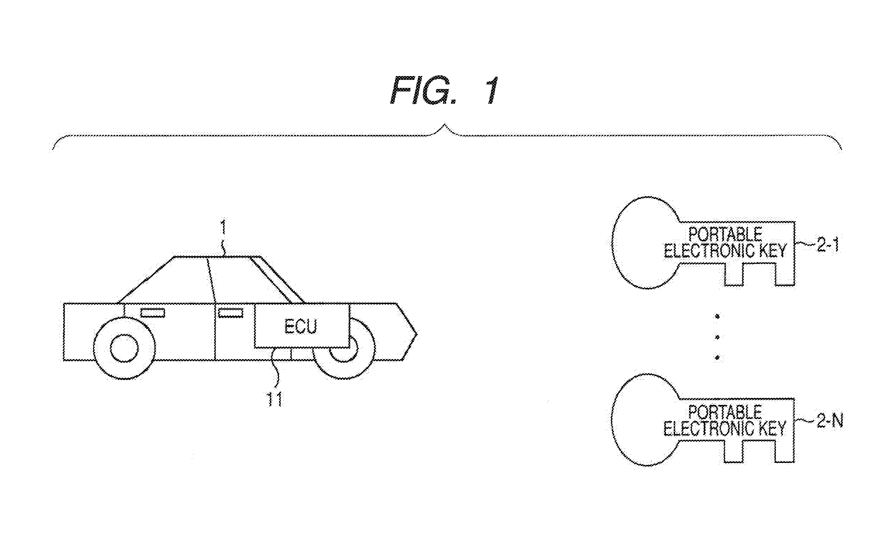

Fig. 1 shows a structural example of a vehicle anti-theft system as a radio communication system according to an embodiment of the invention.

The vehicle anti-theft system in Fig. 1 includes an ECU 11 mounted on a vehicle 1 as a fixed radio communication unit and N portable electronic keys 2-1 to 2-N (N is an integer larger than or equal to 2) as a portable radio communication unit.

When there is no need to discriminate the portable electronic keys 2-1 to 2-N from one another, they are collectively referred to as a portable electronic key 2. Although the portable electronic keys 2 is not generally counted by "unit", this specification uses "unit" to emphasis that the portable electronic key 2 is an embodiment of the portable radio communication unit.

The ECU 11 performs communication for authentication with one of the portable electronic keys 2-1 to 2-N, and when authentication is given, the ECU 11 executes necessary processes for unlocking the door of the vehicle 1 or starting the engine (hereinafter, referred to as a door unlocking process and so on).

However, when two or more of the portable electronic keys 2-1 to 2-N are present in the communication range of the ECU 11, transmission frames from the two or more portable electronic keys 2 are sent to the ECU 11 substantially at the same time, as described above. As a result, the transmission frames collide with one another at the ECU 11 to disable communication for authentication, thus causing the problem of precluding normal communication.

Thus, the inventors have invented two methods for solving the above problem. The two methods will be hereinafter referred to as a data-collision detection method and an advance regulation method for discriminate the two methods from each other. From which the names are derived is not described here because it will be known by the following descriptions of the two methods.

The term "request" used in the invention is a radio signal sent from the fixed radio communication unit (the ECU 11 in this embodiment), which has the function of making a portable radio communication unit send a signal in response to reception of the "request" by a portable radio communication unit (the portable electronic key 2 in this embodiment) that is present in the communication range. The term "answer" indicates a radio signal sent from the portable radio communication unit upon reception of the "request". The function of the "answer" may be either the function of simply indicating reception of a signal or the function of requesting or making the fixed radio communication unit to execute some operation. The "answer" may include the ID of each radio communication unit, the positional information on each portable radio communication unit, a code for requiring operation for the vehicle or the fixed radio communication unit.

### (Data-collision detection method)

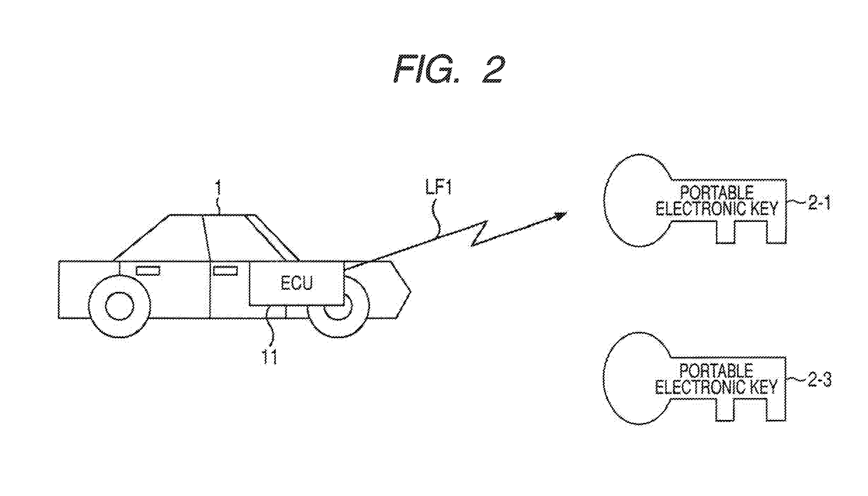

Referring first to Figs. 2 to 13, a data-collision detection method will be described.

For the sake of simplification, we will describe the operation in the case where two of the portable electronic keys 2-1 to 2-N, for example, portable electronic keys 2-1 and 2-3 are present in the communication range of the ECU 11. However, the operation in the case where any two or more of the portable electronic keys 2-1 to 2-N are present in the communication range of the ECU 11 is also as follows.

For example, as shown in Fig. 2, the ECU 11 regularly sends a request LF1 for authentication at a low frequency (LF) .

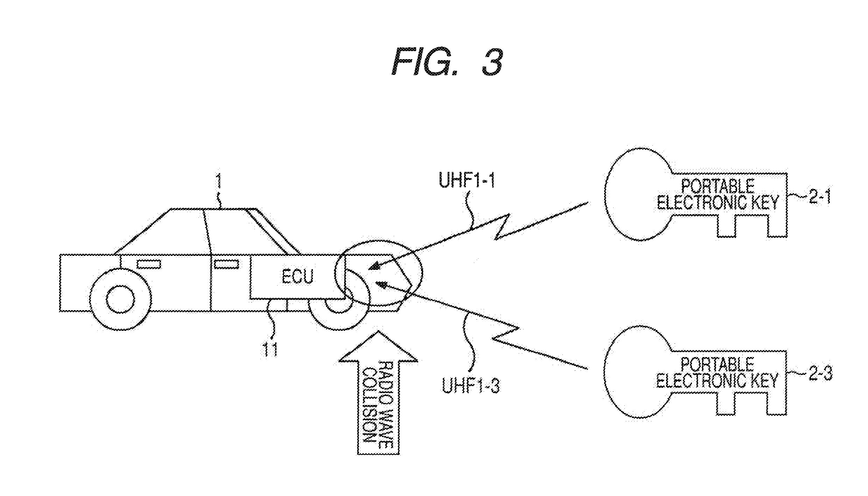

In this case, upon reception of the request LF1, the portable electronic keys 2-1 and 2-3 present in the communication range of the ECU 11 send answers UHF1-1 and UHF1-3 to the ECU 11 at an ultra high frequency, respectively, as shown in Fig. 3.

Then, as shown in Fig. 3, the radio wave collision of the answers UHF1-1 and UHF1-3 will occur in the ECU 11.

Thus, in the data-collision detection method, the answer to the request from the ECU 11 has a configuration in which it can be identified when mixed with the answer of another portable electronic key 2 so that such radio wave collision can be detected by the ECU 11. In this case, the ECU 11 can determine that radio wave collision has occurred, that is, the answers are mixed up by knowing in advance the respective configurations of the answers of the portable electronic keys 2. When it is determined that the answers are mixed up, the ECU 11 communicates with the individual portable electronic keys 2 to which priorities are assigned by a specified method. Thus, the ECU 11 can authenticate a specified key on the basis of the result of individual communications. Alternatively, when the ECU 11 determines that the answers are mixed up, the ECU 11 specifies a plurality of portable electronic keys 2 that have sent answers from the mixed reception signals, and communicates with the individual portable electronic keys 2 to which priorities are assigned by a specified method, to be allowed to authenticate a specified key on the basis of the result of individual communication.

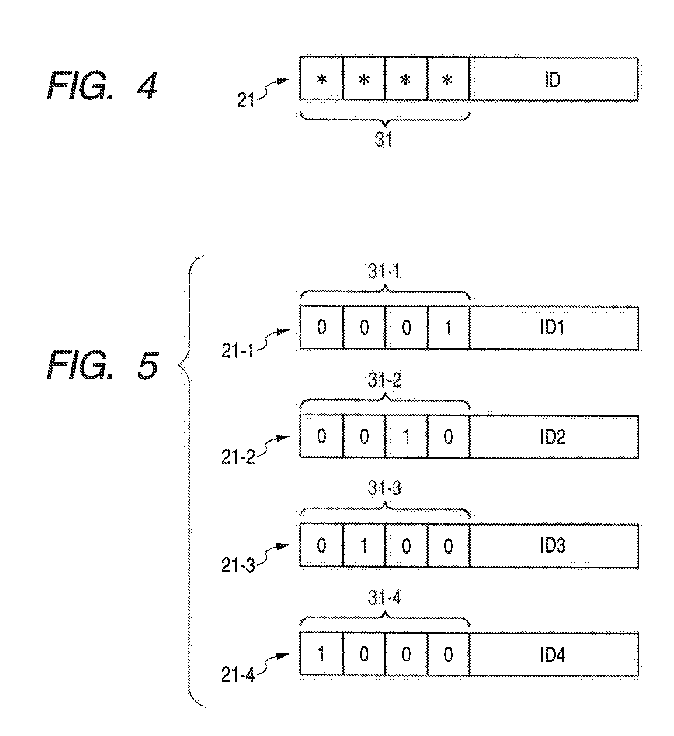

In other words, the answer of a portable electronic key 2 used in the data-collision detection method may have any configuration provided that it has a configuration in which it can be identified when mixed with the answer of another portable electronic key 2. However, the transmission frame of the answer of this embodiment employs a frame 21 shown in Fig. 4.

The frame 21 includes a bit train 31 for the ECU 11 to detect a radio wave collision and the identification (ID) of the portable electronic key 2, the ID being used as an answer. Hereinafter, the frame 21 will be particularly referred to as a collision detection frame 21. Likewise, the bit train 31 will be particularly referred to as a collision-detection bit train 31.

When N units of portable electronic keys 2-1 to 2-N are present, the collision-detection bit train 31 of the collision detection frame 21 of one portable electronic key 2 includes N bits. In this case, the N bits are defined such that only specified one bit is "1" and all the other bits are "0". Here the N bits are defined such that the bit of "1" of one portable electronic key 2 is unique, or different from all the bits "1" of all the other portable electronic keys 2.

Specifically specking, when N = 4, that is, four portable electronic keys 2-1 to 2-4 are present, the collision detection frame 21-1 of the portable electronic key 2-1 includes a collision-detection bit train 31-1 defined as "0001" and the ID1 of the portable electronic key 2-1, as shown in Fig. 5.

The collision detection frame 21-2 of the portable electronic key 2-2 includes a collision-detection bit train 31-2 defined as "0010" and the ID2 of the portable electronic key 2-2.

The collision detection frame 21-3 of the portable electronic key 2-3 includes a collision-detection bit train 31-3 defined as "0100" and the ID3 of the portable electronic key 2-3.

The collision detection frame 21-4 of the portable electronic key 2-4 includes a collision-detection bit train 31-4 defined as "1000" and the ID4 of the portable electronic key 2-4.

In this case, when only one of the portable electronic keys 2-1 to 2-4 is present in the communication range of the ECU 11, the ECU 11 will receive only one of the collision detection frames 21-1 to 21-4 as an answer to the request (the request LF1 in the example of Fig. 2). At that time, only one of the four bits that constitute the collision-detection bit train 31 becomes "1" even if any of the collision detection frames 21-1 to 21-4 is received by the ECU 11. In other words, the ECU 11 can recognize that no radio wave collision has occurred by confirming that only one of the four bits of the received collision-detection bit train 31 is "1".

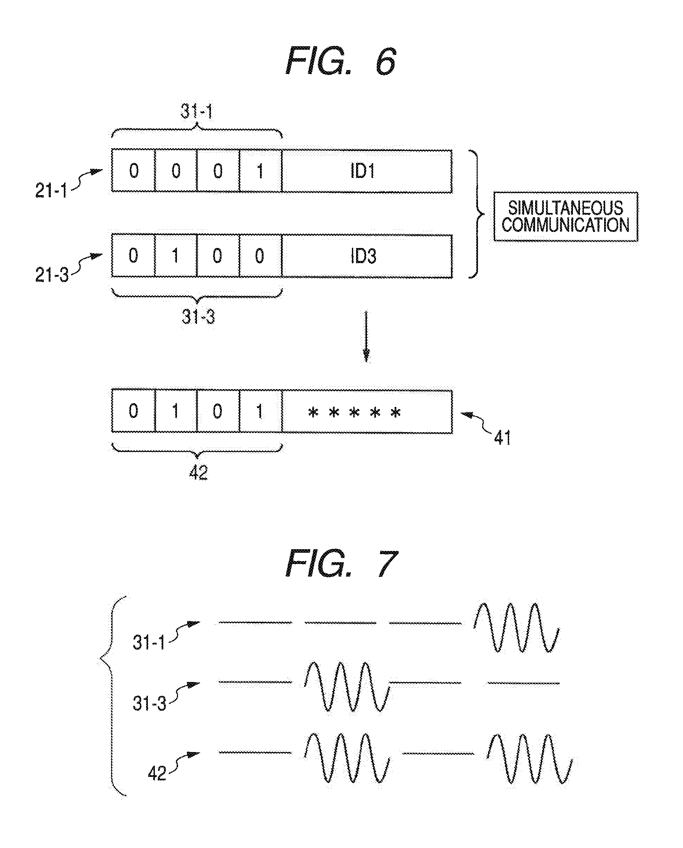

In contrast, when two portable electronic keys 2-1 and 2-3 are present in the communication range of the ECU 11, as shown in Fig. 3, the portable electronic keys 2-1 and 2-3 will send the collision detection frames 21-1 and 21-3, respectively, substantially at the same time as answers to the request, as shown in Fig. 6. As a result, as has been described with reference to Fig. 3, the collision detection frames 21-1 and 21-3 come into a radio wave collision at the ECU 11. Thus, the ECU 11 will receive a frame 41 in Fig. 6 as an answer.

The frame received by the ECU 11 as an answer is hereinafter referred to as a received collision detection frame. That is, in the example of Fig. 6, the frame 41 is the received collision detection frame.

In this case, of the received collision detection frame 41, two of the four bits in a bit train 42 (hereinafter, referred to as a received collision-detection bit train 42) in the position corresponding to the position of the collision-detection bit train 31 of the collision detection frame 21 becomes "1".

Specifically speaking, the collision detection frames 21-1 and 21-3 are modulated by the portable electronic keys 2-1 and 2-3, respectively, by an amplitude shift keying (ASK) system, and are sent as answers UHF 1-1 and 1-3, respectively.

Assume that the signals are processed so that the time lag, or the difference in distance until the request LF1 is received by the portable electronic keys 2-1 and 2-3 is negligible. Assume that the times after the portable electronic keys 2-1 and 2-3 receive the request LF1 until they return answers UHF 1-1 and 1-3 are the same because they are the same in terms of design.

On such assumption, the modulated signal of the collision-detection bit train 31-1 of the collision detection frame 21-1 and the modulated signal of the collision-detection bit train 31-2 of the collision detection frame 21-2 are as shown in the uppermost and the center in Fig. 7, respectively. Accordingly, those modulated signals are combined by a radio wave collision, and as a result, the lowermost modulated signal shown in Fig. 7 is received by the ECU 11. Thus, the ECU 11 demodulates the modulated signal to detect the received collision-detection bit train 42, that is, "0101" shown in Fig. 6.

Thus, the ECU 11 can recognize the occurrence of a radio wave collision by confirming that two of the four bits of the received collision-detection bit train 42 are "1".

Although not shown, when any two of the portable electronic keys 2-1 to 2-4 are present in the communication range of the ECU 11 similarly, two of the four bits of the received collision-detection bit train become "1". When any three of the portable electronic keys 2-1 to 2-4 are present in the communication range of the ECU 11, three of the four bits of the received collision-detection bit train become "1". When all of the four portable electronic keys 2-1 to 2-4 are present in the communication range of the ECU 11, all of the four bits of the received collision-detection bit train become "1".

In other words, when any K units (K is any of integers 1 to N) of the portable electronic keys 2-1 to 2-4 are present in the communication range of the ECU 11, K of the N bits of the received collision-detection bit train becomes "1".

Accordingly, the ECU 11 can recognize the occurrence of a radio wave collision by determining that two bits or more of the N bits of the received collision-detection bit train are "1".

Furthermore, when the ECU 11 knows the configuration of the respective collision-detection bit trains 31-1 to 31-N of the portable electronic keys 2-1 to 2-N in advance, that is, the positions of "1" of the bits, the ECU 11 can determine which of the portable electronic keys 2-1 to 2-N is present in the communication range by detecting the position of "1" in the received collision-detection bit train. Then, the ECU 11 can specify one or more portable electronic keys 2 recognized that they present in the communication range as candidates for authentication communication (hereinafter, referred to as authentication candidates).

Specifically speaking, in the example of Fig. 6, the ECU 11 can specify the portable electronic key 2-3 as an authentication candidate by detecting the second bit "1" of the "0101" in the received collision-detection bit train 42. Similarly, the ECU 11 can specify the portable electronic key 2-1 as an authentication candidate by detecting the fourth bit "1" of the "0101".

Thereafter, the ECU 11 determines a specified one unit as a unit to be authenticated from among the portable electronic keys 2-1 and 2-3 specified as authentication candidates, and communicates with the unit to make an authentication.

In this case, the method for determining the unit to be authenticated from the authentication candidates is not particularly limited. However, assume that the embodiment adopts a method of determining the unit to be authenticated according to the respective predetermined priorities of the portable electronic keys 2-1 to 2-N.

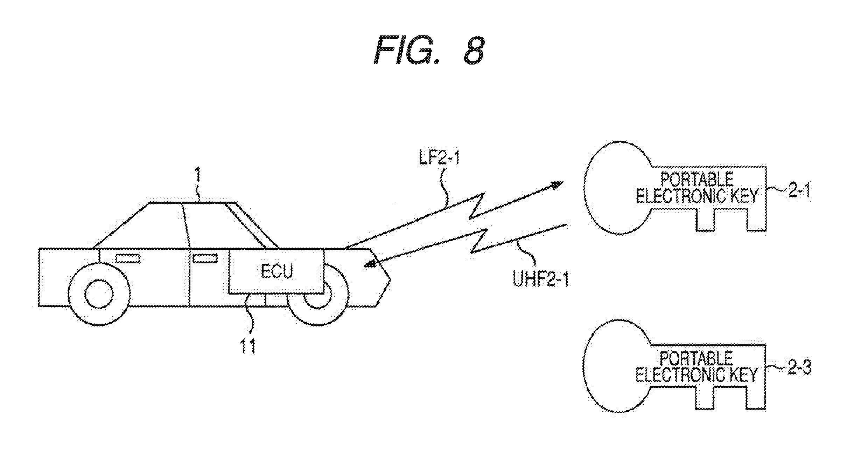

Specifically, for example, the priority is determined in the order of the portable electronic keys 2-1 to 2-N. In this case, the ECU 11 determines a higher-priority key of the portable electronic keys 2-1 and 2-3 which are authentication candidates, that is, the portable electronic key 2-1 in this embodiment, as a unit to be authenticated. Then, the ECU 11 makes an authentication communication with the portable electronic key 2-1, as shown in Fig. 8.

Specifically, the ECU 11 sends a request (hereinafter, particularly referred to as an individual request) LF2-1 for individually authenticating the portable electronic key 2-1 to the portable electronic key 2-1. That is, the individual request LF2-1 is set so that only the portable electronic key 2-1 responds thereto. In other words, the frame that constitutes the individual request is not particularly limited in form as long as it is configured such that only a unit to be authenticated responds thereto. Specifically, for example, the individual request LF2-1 can adopt a frame equivalent to the collision detection frame 21-1 of Fig. 5 for the portable electronic key 2-1, because only the portable electronic key 2-1 may respond thereto.

In this case, the portable electronic key 2-1 sends an answer UHF2-1 to the individual request LF2-1 to the ECU 11. At that time, the portable electronic key 2-3 does not respond to the individual request LF2-1 even if it receives it, as described above.

Upon reception of the answer UHF2-1, the ECU 11 determines that it has succeeded in authentication of the portable electronic key 2-1, and executes a door unlocking process and the like.

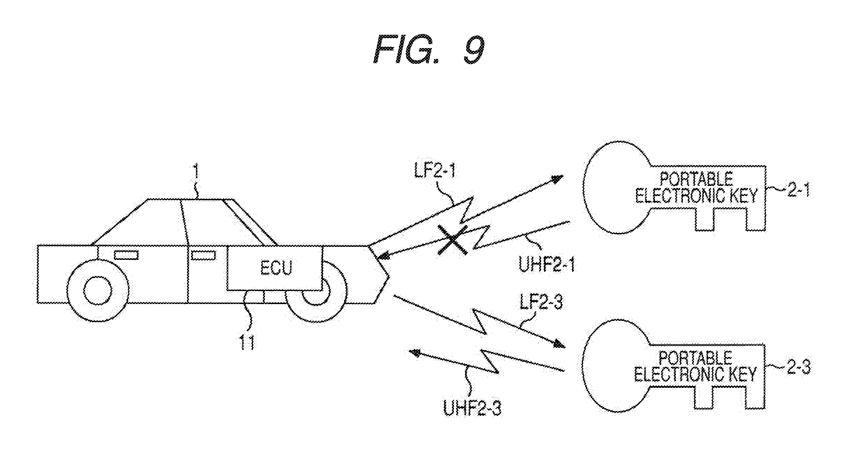

In contrast, for example, when the ECU 11 cannot receive the answer UHF2-1 from the portable electronic key 2-1, as shown in Fig. 9, the ECU 11 determines that it has failed in authentication of the portable electronic key 2-1, and determines the next-priority portable electronic key 2-3 as a unit to be authenticated. Then, the ECU 11 makes an authentication communication with the portable electronic key 2-3, as shown in Fig. 9.

That is, the ECU 11 sends an individual request LF2-3 to the portable electronic key 2-3. The individual request LF2-3 is set so that only the portable electronic key 2-3 responds thereto. Specifically, for example, the individual request LF2-3 can adopt a frame equivalent to the collision detection frame 21-3 of Fig. 5 for the portable electronic key 2-3, in combination with the example of Fig. 8.

In this case, the portable electronic key 2-3 sends an answer UHF2-3 to the individual request LF2-3 to the ECU 11. At that time, the portable electronic key 2-1 does not respond to the individual request LF2-3 even if it receives it, as described above.

Upon reception of the answer UHF2-3, the ECU 11 determines that it has succeeded in authentication of the portable electronic key 2-3, and executes a door unlocking process and the like.

Although not shown, when the ECU 11 could not receive the answer UHF2-3, that is, any of the answers UHF2-1 and 2-3 from the portable electronic keys 2-1 and 2-3 present in the communication range, the ECU 11 disables the execution of door unlocking process and the like.

Thus, the embodiment is configured to execute individual authentication communication in the order of descending priorities. Therefore, the time for authentication communication can be reduced when the user carries a high-priority portable electronic key 2.

When failed in authentication communication with a specified portable electronic key 2, the ECU 11 tries another authentication communication with the next-priority portable electronic key 2, thus allowing more reliable authentication communication.

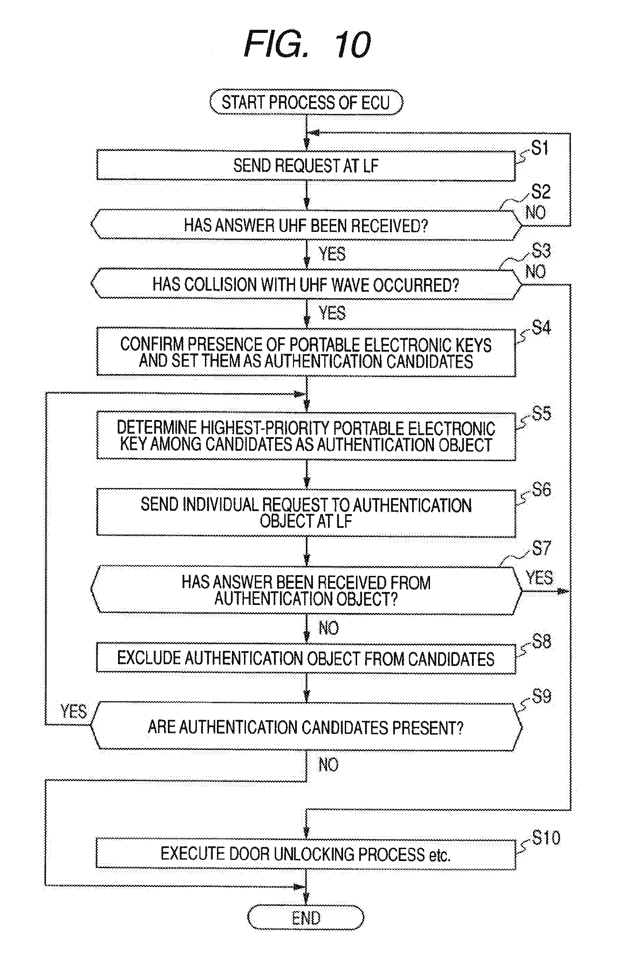

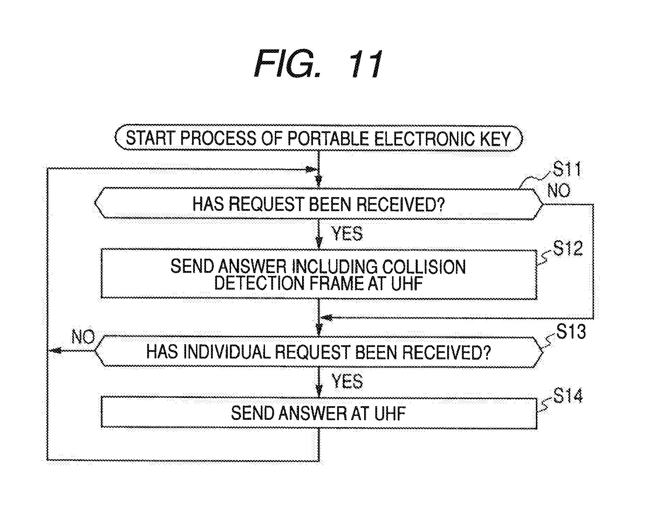

A series of processes for a vehicle anti-theft system incorporating the foregoing data-collision detection method to execute unlocking process and the like is performed according to the flowcharts shown in Figs. 10 and 11, for example. Fig. 10 is a flowchart for the process of the ECU 11; and Fig. 11 is a flowchart for the process of a portable electronic key 2.

In step S1 of Fig. 10, the ECU 11 sends a request at LF.

In step S2, the ECU 11 determines whether it has received a UHF as an answer.

When all of the portable electronic keys 2-1 to 2-N are present outside the communication range of the ECU 11, a negative determination is made in step S2, where the process is returned to step S1, and the following processes are repeated. In other words, the ECU 11 regularly sends a request LF until at least one of the portable electronic keys 2-1 to 2-N enters the communication range of the ECU 11. It is also possible that when it is determined that the owner of the portable electronic key 2 has come close to a vehicle 1, the ECU 11 sends a request LF.

Thereafter, when at least one of the portable electronic keys 2-1 to 2-N enters the communication range of the ECU 11, an answer UHF will be sent (refer to step S12 of Fig. 11, to be described later), that is, the above-described collision detection frame will be sent. Thus, the ECU 11 will receive a combination signal thereof (a collision detection frame itself if only one portable electronic key 2 is present) as a received collision detection frame. Thus, a positive determination is made in step S2, and the process proceeds to step S3.

In step S3, the ECU 11 determines whether a collision of UHF radio waves has occurred.

As has been described, the fact that only one of the N bits that constitute the received collision-detection bit train of the received collision detection frame is "1" indicates that no collision of UHF radio waves has occurred. Upon confirmation of that, the ECU 11 makes a negative determination in step S3, and executes a door unlocking process and the like in step S10. Thus, the process of the ECU 11 ends. That is, in the example of Fig. 10, one of the conditions for authentication is that only one of the N bits of the received collision-detection bit train is "1", that is, No in the process of step S 3. When the condition is met, a door unlocking process and the like are executed.

In contrast, the fact that two or more of the N bits that constitute the received collision-detection bit train is "1" indicates that a collision of UHF radio waves has occurred. Upon confirmation of that, the ECU 11 makes a positive determination in step S3, and executes processes following step S4.

In step S4, the ECU 11 recognizes two or more "1" in the received collision-detection bit train and their positions to thereby detect the presence of a plurality of portable electronic keys 2, and sets them as authentication candidates.

Specifically, when the collision detection bit trains 21-1 to 21-4 in the example of Fig. 5 are used as answers, and when the M^{th} bit (M is any of integers 1 to 4) from the last of the four bits of the received collision-detection bit train is "1", a portable electronic key 2-M is determined as an authentication candidate.

In step S5, the ECU 11 determines the highest-priority portable electronic key 2 of the authentication candidates as a unit to be authenticated.

In step S6, the ECU 11 sends an individual request to the unit to be authenticated at LF.

In step S7, the ECU 11 determines whether an answer from the unit to be authenticated has been received.

When an answer UHF is sent from the unit to be authenticated (when the process of step S14 in Fig. 11, to be described later, is executed), the ECU 11 makes a positive determination in step S7 by receiving the answer, and executes a door unlocking process and the like in step S10. Thus, the process of the ECU 11 ends. Specifically, in the example of Fig. 10, a plurality of portable electronic keys 2 that has sent the answers that have caused a radio wave collision is set as authentication candidates, of which a higher-priority key 2 is determined as a unit to be authenticate, to which an individual request is sent. In this case, one of the conditions for authentication is that an answer to the individual request is received, that is, a positive determination is made in the process of step S7. When the condition is met, a door unlocking process and the like are executed.

In contrast, when the answer cannot be received because no answer from the unit to be authenticated has been sent or the like, the ECU 11 makes a negative determination in step S7, and in step S8, it excludes the unit to be authenticated from the authentication candidates.

In step S9, the ECU 11 determines whether an authentication candidate is present.

That is, when all the authentication candidates set in the process of step S4 have been excluded through repetition of the process of step S8, a negative determination is made in step S9, and the process of the ECU 11 ends.

Although not shown, when a negative determination is made in step S9, the process may not be finished and be returned to step S1, and the following processes may be repeated. In other words, when failed in authentication, the ECU 11 may disable a door unlocking process and the like and thereafter send regular requests again.

In contrast, when one or more authentication candidates remain, the process is returned to step S5, and the following processes are repeated. Specifically, the highest-priority portable electronic key 2 of the remaining portable electronic keys 2 become a new unit to be authenticated, to which the processes from step S5 to S10 are repeated.

An example of the process of the portable electronic key 2 corresponding to the process of the ECU 11 will be described in the flowchart of Fig. 11.

In step S11 of Fig. 11, the portable electronic key 2 determines whether it has received a request.

When a request is sent from the ECU 11 in step S1 of Fig. 10, the portable electronic key 2 makes a positive determination in Step S11 by receiving it, and in step S12, the portable electronic key 2 sends an answer including the collision detection frame 21 of Fig. 4 to the ECU 11 at UHF.

The reason why we use a description, an answer including the collision detection frame 21 of Fig. 4, is that, although in the example, the collision detection frame 21 itself is an answer, the configuration of the answer is not particularly limited to the foregoing example. For example, the answer may be a frame including another data added after the ID.

When the process of step S12 is executed, or when it is determined in step S11 that no request is received, the process proceeds to step S13.

In step S13, the portable electronic key 2 determines whether it has received an individual request.

When an individual request is sent from the ECU 11 by the process of step S6 of Fig. 10, the portable electronic key 2 receives it and thus makes a positive determination in step S13, and in step S14, sends an answer to the ECU 11 at UHF.

When the process of step S14 is executed or when it is determined in step S13 that no individual request is received, the process is returned to step S11, and the following processes are repeated.

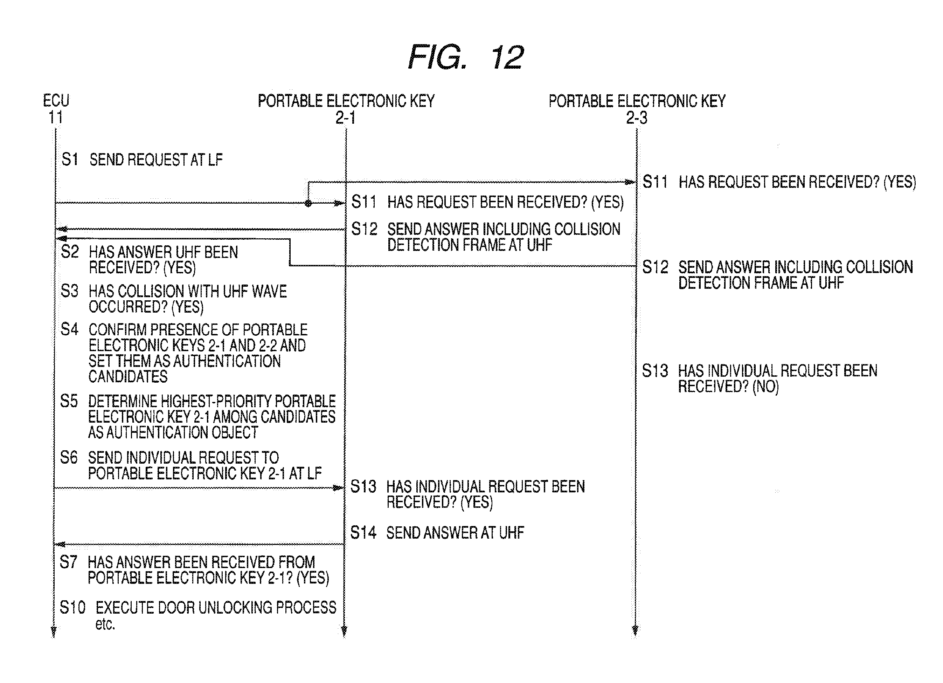

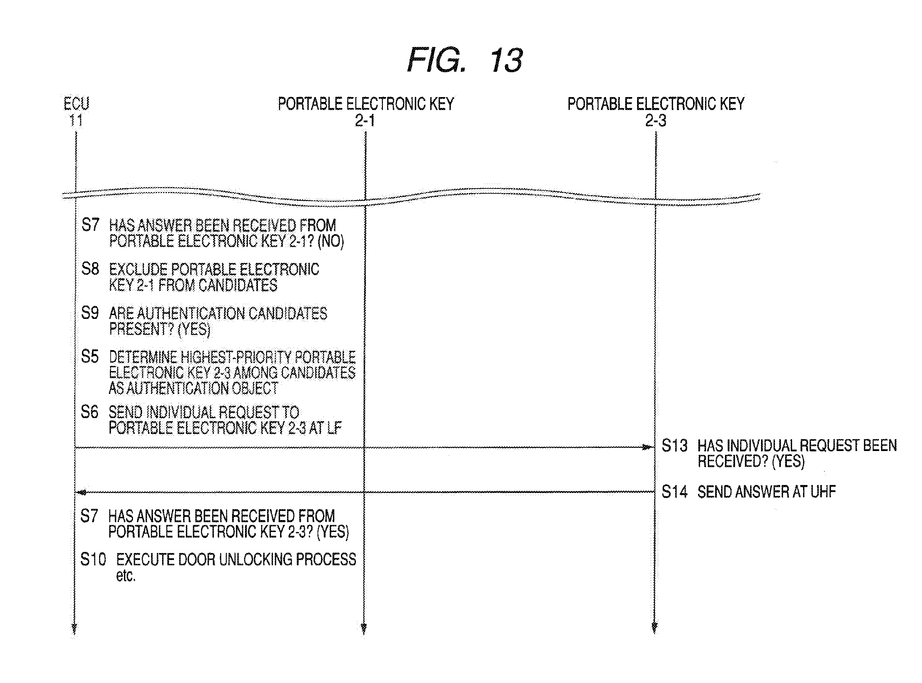

A concrete example of the relationship between the processes of Figs. 10 and 11 is shown in Figs. 12 and 13. Fig. 12 is a flowchart for the case where the operations described with reference to Figs. 2, 3, and 8 are associated with Figs. 10 and 11. Fig. 13 is a flowchart for the case where the part of Fig. 9 among the operations described with reference to Figs. 2, 3, and 9 is associated with Figs. 10 and 11. In other words, part of Figs. 2 and 3 of the operations in Figs. 2, 3, and 9, that is, the process directly before the determination process of step S7 is omitted in Fig. 13 because it is also shown in Fig. 12.

The descriptions of Figs. 12 and 13 will be omitted here because they are the same as those of Figs. 2, 3, 8, and 9.

As has been described, the data-collision detection method uses an answer configured to be identified, when mixed with the answer of another portable electronic key 2. Accordingly, even if a radio wave collision occurs in the ECU 11 by the answers from a plurality of portable electronic keys 2 that is present in the communication range of the ECU 11, the ECU 11 can detect the occurrence, thus allowing normal authentication communication. Furthermore, the use of the answer with the configuration as in Fig. 4 allows the ECU 11 to recognize the individual portable electronic keys 2 by detecting the position of "1" of the reception collision detection bit, thus enabling more appropriate authentication communication.

### (Advance Regulation Method)

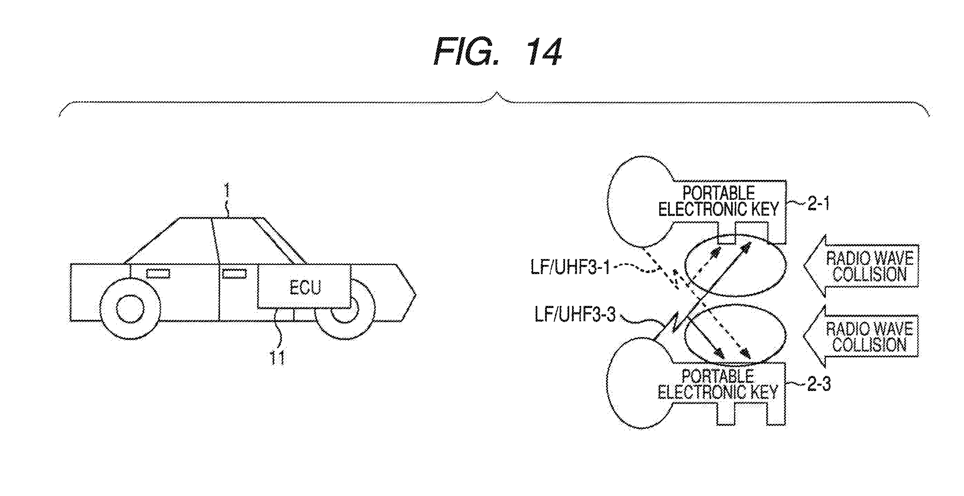

Referring to Figs. 14 to 18, an advance regulation method will be described.

For agreement with the description of the foregoing data-collision detection method, we will describe the operation of the advance regulation method in the case where two of the portable electronic keys 2-1 to 2-N, for example, the portable electronic keys 2-1 and 2-3 are present in the communication range of the ECU 11. However, the operation in the case where any two or more of the portable electronic keys 2-1 to 2-N are present in the communication range of the ECU 11 is in principle the same as the following operation.

For example, the operation of the ECU 11 described with reference to Fig. 2, that is, the operation of regularly transmitting the request LF1 is also executed in the advance regulation method.

However, in the advance regulation method, upon receiving the request LF1, the portable electronic keys 2-1 and 2-3 which are present in the communication range of the ECU 11 send information LF/UHF 3-1 and 3-3, respectively, for determining whether another portable electronic key 2, which causes a radio wave collision, is present, as shown in Fig. 14, before returning an answer to the ECU 11. Hereinafter, the information for determining whether another portable electronic key 2, which causes a radio wave collision, is present is referred to as information on the presence or absence of another electronic key. The information is sometimes simply referred to as presence information.

The portable electronic keys 2-1 and 2-3 try to receive presence information LF/UHF3-1 and LF/UHF3-3 sent by themselves, respectively.

Fig. 14 expresses presence information as LF/UHF3-1 and LF/UHF3-3 because the form of the transmission of the presence information in space is not particularly limited, and may be either LF or UHF.

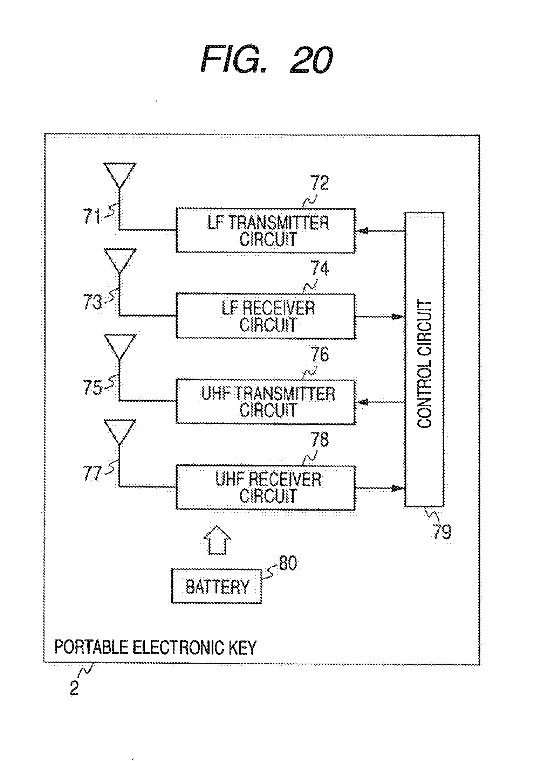

To send presence information at LF, the portable electronic key 2 needs to have an LF transmitter/receiver circuit (e.g., an LF transmitter circuit 72 and an LF receiver circuit 74 in Fig. 20, to be described later). Alternatively, the LF receiver circuit for receiving presence information may be used both as an LF receiver circuit for receiving the request LF1 from the ECU 11.

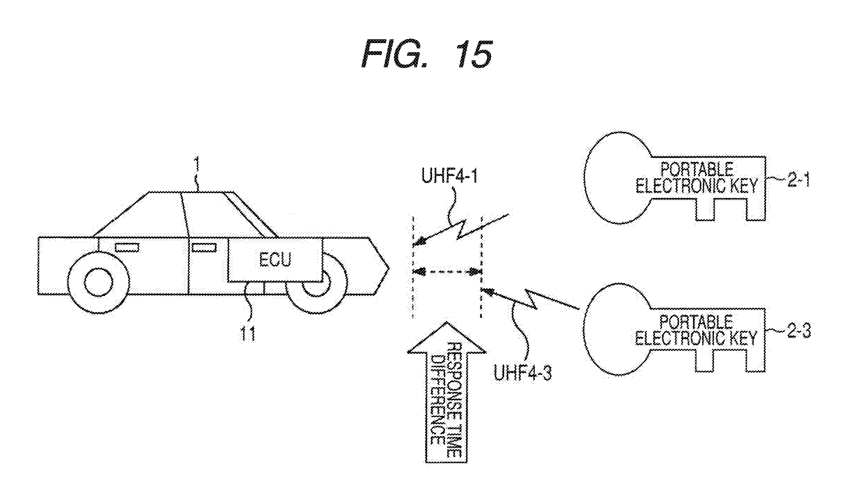

In contrast, to transmit presence information at UHF, the portable electronic key 2 needs to have a UHF receiver circuit (e.g., a UHF receiver circuit 78 in Fig. 20, to be described later) for receiving presence information, in addition to the LF receiver circuit (the LF receiver circuit 74 in Fig. 20, to be described later) for receiving the request LF1 from the ECU 11. In this case, the response time until a door unlocking process and the like are executed by the ECU 11 can be reduced in comparison with the case of transmitting presence information at LF. The UHF transmitter circuit for transmitting presence information can be used both as a UHF transmitter circuit for transmitting an answer (e.g., the answers UHF4-1 or UHF4-3 of Fig. 15, to be described later) to the ECU 11.

Although not shown, if only one portable electronic key 2 is present, the portable electronic key 2 can normally receive only the presence information sent by itself. Accordingly, in this case, the portable electronic key 2 determines that no other portable electronic key 2 is present, and immediately sends a UHF to the ECU 11 as an answer.

In contrast, in the example of Fig. 14, the portable electronic key 2-1 receives not only the presence information LF/UHF3-1 sent by itself but also the presence information LF/UHF3-3 sent by another portable electronic key 2-3. Thus, a radio wave collision due to the presence information LF/UHF3-1 and LF/UHF3-3 will occur. Also when further another portable electronic key 2 (not shown) is present, a radio wave collision will occur. Thus, when the portable electronic key 2-1 has received not only the presence information LF/UHF3-1 sent by itself but also the presence information (in the example of Fig. 14, presence information LF/UHF3-3) sent by another portable electronic key 2, the portable electronic key 2-1 determines that another portable electronic key 2 is present. The case where the portable electronic key 2-1 has received not only the presence information LF/UHF3-1 sent by itself but also the presence information sent by another portable electronic key 2 includes the case where the portable electronic key 2-1 has received presence information other than that of itself and the case where it could not normally receive the presence information LF/UHF3-1 sent by itself.

Likewise, the portable electronic key 2-3 receives not only the presence information LF/UHF3-3 sent by itself but also the presence information LF/UHF3-1 sent by another portable electronic key 2-1. Thus, a radio wave collision due to the presence information LF/UHF3-3 and LF/UHF3-1 will occur. Also when further another portable electronic key 2 (not shown) is present, a radio wave collision will occur. Thus, when the portable electronic key 2-3 has received not only the presence information LF/UHF3-3 sent by itself but also the presence information (in the example of Fig. 14, presence information LF/UHF3-1) sent by another portable electronic key 2, the portable electronic key 2-3 determines that another portable electronic key 2 is present. The case where the portable electronic key 2-3 has received not only the presence information LF/UHF3-3 sent by itself but also the presence information sent by another portable electronic key 2 includes the case where the portable electronic key 2-3 has actually received presence information other than that of itself and the case where it could not normally receive the presence information LF/UHF3-3 sent by itself.

Thus, the portable electronic keys 2-1 and 2-3 receive the presence information LF/UHF3-3 and 3-1 of themselves, respectively (which includes that the presence information LF/UHF3-1 and 3-3 from themselves could not normally be received). Therefore, the portable electronic keys 2-1 and 2-3 can recognize the presence of a plurality of portable electronic keys 2.

A notable point here is that the presence of a plurality of portable electronic keys 2 can be recognized only by the presence or absence of reception of presence information from another portable electronic key 2 (which includes information on whether the presence information from itself could be normally received). Therefore, there is no need to use a frame particular to presence information itself, and any frame, for example, a normal answer frame can be used. Alternatively, the use of the received collision detection frame described with reference to Figs. 6 and 7 allows recognition of the presence of a plurality of portable electronic keys 2 and also allows identification of the portable electronic key 2.

When the portable electronic keys 2-1 and 2-3 have recognized the presence of a plurality of portable electronic keys 2 in that way, they do not immediately return an answer to the ECU 11, and transmit answers UHF4-1 and UHF 4-3 to the ECU 11 at different response time, respectively, as shown in Fig. 15.

Although the method for staggering the response time is not particularly limited, the embodiment adopts a method in which the portable electronic keys 2 each generate random numbers, and determine the response delay times of the answers from the random numbers, and transmit answers at the point in time the response delay times have passed. The maximum time of the response delay time is predetermined according to the total number N of the portable electronic keys 2, and the maximum value of the generated random numbers is also predetermined according to the maximum response delay time.

Alternatively, the response delay time may be preset to each portable electronic key 2. The time for setting can be set freely; for example, it may be set at the shipment by the manufacturer. Also the method for setting is not particularly limited; for example, a portable electronic key 2 for the owner is assigned the highest priority, and is set at the shortest response delay time, while a spare portable electronic key 2 is assigned the second priority. The settings can be achieved by being written in the memory and the like in the control circuit of the portable electronic keys 2.

In this embodiment, information on the presence of a plurality portable electronic keys 2 (hereinafter, referred to as plural presence information) is described in a specified region of the frame of the answer. This allows the ECU 11 to easily determine whether a plurality of portable electronic keys 2 is present in the communication range by finding the specified region.

The ECU 11 is provided with a waiting time corresponding to the total number N of the portable electronic keys 2, for example, a waiting time corresponding to the maximum response delay time so as to receive the answers from the plurality of portable electronic keys 2. For example, upon reception of the first answer, the ECU 11 determines that authentication has been made, and executes a door unlocking process and the like.

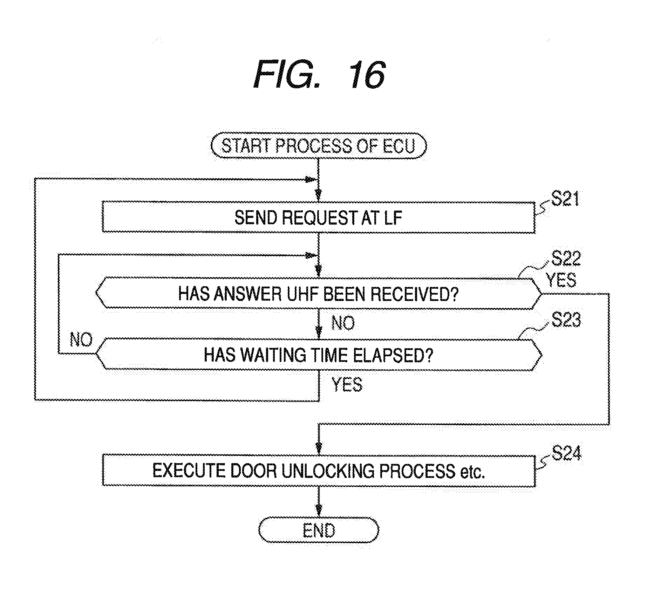

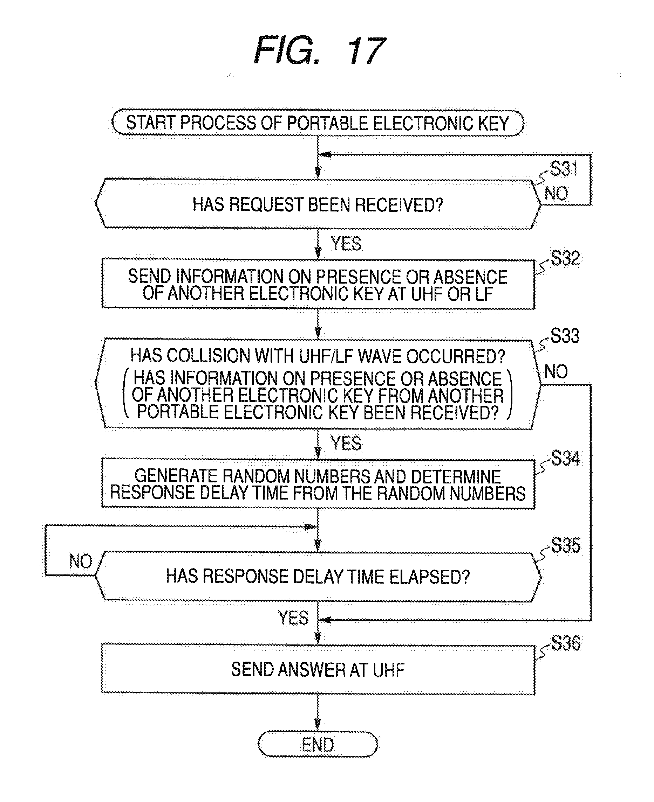

A series of processes for a vehicle anti-theft system that employs the foregoing advance regulation method to execute an unlocking process and the like is performed according to the flowchart shown in Figs. 16 and 17, for example. Fig. 16 is a flowchart for the process of the ECU 11; and Fig. 17 is a flowchart for the process of a portable electronic key 2.

In step S21 of Fig. 16, the ECU 11 sends a request at LF.

In step S22, the ECU 11 determines whether the ECU 11 has received a UHF as an answer.

When it is determined in step S22 that an answer UHF has not been received, the ECU 11 determines in step S23 whether the waiting time has elapsed.

When it is determined in step S23 that the waiting time has not elapsed, the process is returned to step S22, and the following processes are repeated. In other words, the loop process of steps S22 and S23 is repeated until the waiting time elapses, unless an answer UHF is sent. After the waiting time has elapsed, a positive determination is made in step S23, and the process is returned to step S21, and the following processes are repeated.

In contrast, when an answer UHF is sent before the waiting time elapses (refer to step S36 in Fig. 17, to be described later), and received by the ECU 11, a positive determination is made in step S22, where it is determined that authentication has been made, and the process proceeds to step S24. In step S24, the ECU 11 executes a door unlocking process and the like. Thus, the process of the ECU 11 ends.

An example of the process of the portable electronic key 2 corresponding to the process of the ECU 11 will be described in the flowchart of Fig. 17.

In step S31, the portable electronic key 2 determines whether it has received a request.

When it is determined in step S31 that no request is received, the process is returned to step S31, and the following processes are repeated. That is, the determination process of step S31 is repeated until a request is sent from the ECU 11.

When a request is sent from the ECU 11 in step S21 of Fig. 16, the portable electronic key 2 receives it, thus makes a positive determination in step S31, and, in step S32, sends information on the presence or absence of another portable electronic key at UHF or LF.

In the example of Fig. 17, the mode of transmission of the information on the presence or absence of another portable electronic key is UHF or LF. However, the mode of transmission of the information on the presence or absence of another portable electronic key is not particularly limited to UHF and LF.

In step S33, the portable electronic key 2 determines whether the collision of UHF or LF waves has occurred.

When only the information on the presence or absence of another portable electronic key sent by itself is normally received, the portable electronic key 2 determines in step S33 that no collision of UHF/LF waves has occurred, and in step S36 sends an answer to the ECU 11 at UHF. Thus the process of the portable electronic key 2 ends.

In contrast, when not only the information on the presence or absence of another portable electronic key sent by itself but also information on the presence or absence of another portable electronic key from another portable electronic key 2 are received (which includes the information on the presence or absence of another portable electronic key sent by itself has not received normally), the portable electronic key 2 determines in step S33 that the collision of UHF/LF waves has occurred, generates random numbers and determines a response delay time from the random number in step S34.

In step S35, the portable electronic key 2 determines whether the response delay time has elapsed.

When it is determined in step S35 that the response delay time has not yet elapsed, the process is returned to step S35 again. That is, the determination process of step S35 is repeated until the response delay time elapses.

When the response delay time has elapsed, a positive determination is made in step S35, and the process proceeds to step S36. In step S36, the portable electronic key 2 sends an answer to the ECU 11 at UHF. Thus the process of the portable electronic key 2 ends.

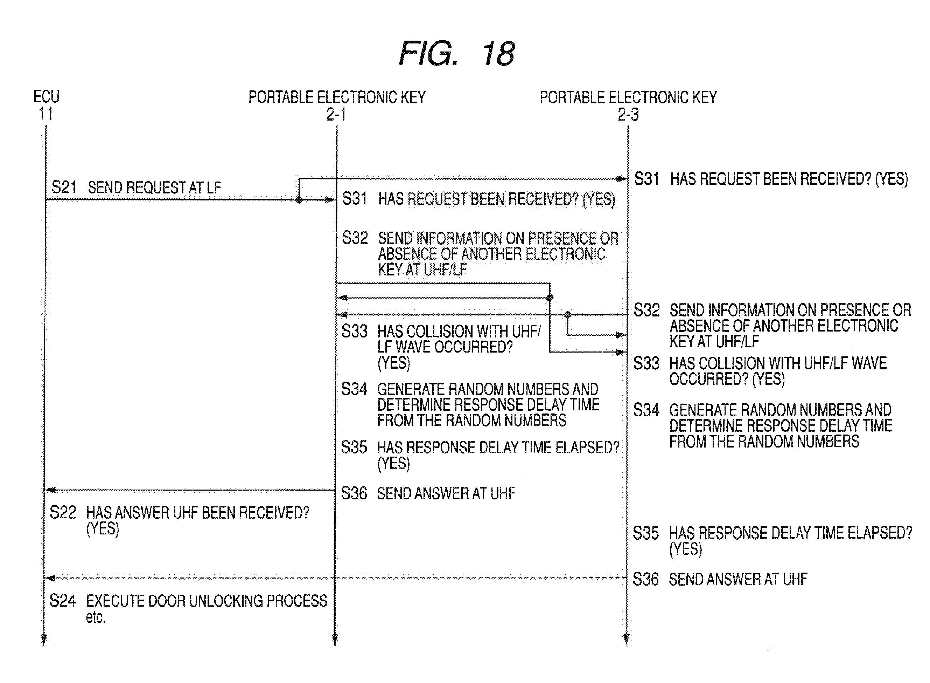

A concrete example of the relationship between the processes of Figs. 16 and 17 is shown in Fig. 18. Fig. 18 is a flowchart for the case where the operations described with reference to Figs. 2, 14, and 15 are associated with Figs. 16 and 17.

The description of Fig. 18 will be omitted here because it is the same as those of Figs. 2, 14, and 15.

As has been described, in the advance regulation method, even if a plurality of portable electronic keys 2 are present in the communication range of the ECU 11, the portable electronic keys 2 can recognize the presence of another portable electronic key 2 by sending information on the presence or absence of another portable electronic key, and with such recognition, the timings of transmission of answers are staggered. Thus, no radio wave collision occurs in the ECU 11, thus allowing normal authentication communication.

The above-described series of processes (or part thereof), for example, the process of at least part of the flowcharts in Figs. 10, 11, 15, and 16 can be executed either with hardware or software.

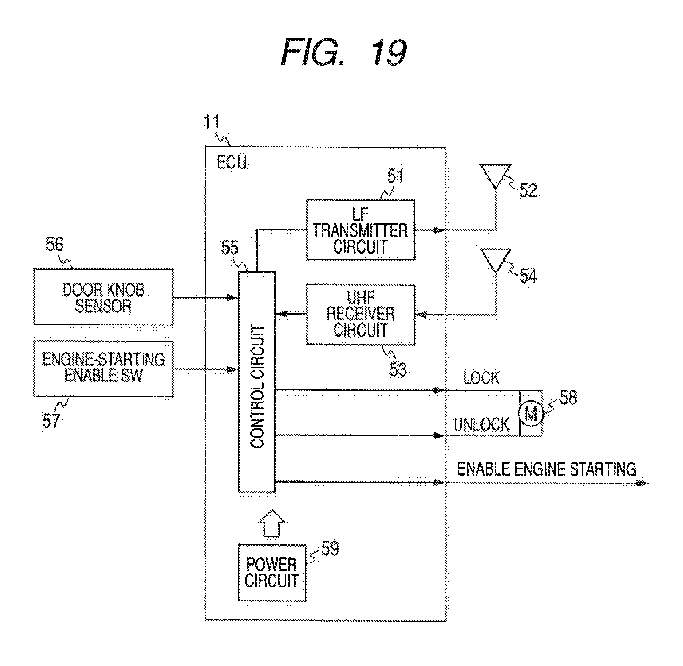

When the series of processes (or part thereof) are executed with hardware, the ECU 11 and the portable electronic key 2 can be configured as shown in Figs. 19 and 20, respectively. That is, Figs. 19 and 20 show an example of the respective hardware configuration of the ECU 11 and the portable electronic key 2.

In the example of Fig. 19, the ECU 11 includes an LF transmitter circuit 51, a UHF receiver circuit 53, a control circuit 55, and a power circuit 59.

The control circuit 55 of the ECU 11 connects to a door knob sensor 56 and an engine-starting enable switch 57 (hereinafter, referred to as an engine-starting enable SW 57 in agreement with Fig. 19).

The door knob sensor 56 is, for example, a proximity switch that detects the body (e.g., hands or fingers) of the user who comes close to or into contact with the door knob of the vehicle or the vicinity thereof to operate the door knob of the vehicle. The engine-starting enable SW 57 is, for example, a proximity switch that detects, for example, the body (e.g., arms or legs) of the user who is seated in the driving seat to start the engine of the vehicle. In this embodiment, the door knob sensor 56 or the engine-starting enable SW 57 functions as a trigger to execute the door unlocking process and the like. In other words, the detection signal (output signal) of the door knob sensor 56 or the engine-starting enable SW 57 acts as a trigger to start the process of step S10 in Fig. 10 and the process of step S24 in Fig. 16.

In place of the door knob sensor 56 or in addition to the door knob sensor 56, another sensor (e.g., a door-knob action sensor) may be provided. The door-knob action sensor is a sensor that outputs a detection signal when the door knob is manipulated. The engine-starting enable SW 57 may have a proximity sensor for detecting the arms or legs of the driver in the positions of the driver seat where controllers for controlling the driving operations (including an engine starting operation) are disposed. Another detecting means for the trigger to execute the door unlocking process and the like includes a sensor (e.g., a door open/close sensor) built in the vehicle.

The control circuit 55 of the ECU 11 connects to the LF transmitter circuit 51. The LF transmitter circuit 51 connects to an antenna 52. Specifically, the LF transmitter circuit 51 sends information, such as a request, provided from the control circuit 55 via the antenna 52 at LF.

The control circuit 55 of the ECU 11 also connects to the UHF receiver circuit 53. The UHF receiver circuit 53 also connects to an antenna 54. Specifically, the UHF receiver circuit 53 receives an answer UHF sent from the portable electronic key 2 via the antenna 54, converts it to an appropriate signal, and provides it to the control circuit 55.

The control circuit 55 of the ECU 11 also connects to a motor 58. The motor 58 is for driving the lock of the vehicle doors, namely, a door-lock actuator.

The control circuit 55 includes a storage section for storing various information and a microcomputer for controlling the entire ECU 11 and necessary information processing (not shown). The storage section (not shown) includes, for example, an erasable nonvolatile memory, and more specifically, an electrically erasable programmable read-only memory (EEPROM).

The control circuit 55 basically executes the processes according to the flowcharts of Fig. 10 and 16. Of the processes, the process of step S10 in Fig. 10 and the process of step S24 in Fig. 16, that is, the door unlocking process and the like are executed as follows. For example, when the detection signal of the door knob sensor 56 is input, the control circuit 55 sends the request LF1 via the antenna 52. When an answer UHF can be received from the portable electronic key 2, the control circuit 55 drives the motor 58 to unlock the door. For example, the detection signal of the engine-starting enable SW 57 is input, the control circuit 55 sends the request LF1 via the antenna 52. When an answer UHF from the portable electronic key can be received, the control circuit 55 outputs an engine start permission.

The power circuit 59 has circuits for necessary voltage conversion and voltage stabilization with a battery (not shown) built in the vehicle as an input power source, which basically constantly supplies power to the power consuming elements of the ECU 11. In the example of Fig. 19, the power consuming elements are the LF transmitter circuit 51, the UHF receiver circuit 53, and the control circuit 55.

In contrast to the ECU 11 in Fig. 19, the portable electronic key 2 in Fig. 20 includes an antenna 71 through a battery 80.

The LF transmitter circuit 72 sends information provided from a control circuit 79 via the antenna 71 at LF. The information provided from the control circuit 79 indicates presence information (information on the presence or absence of another electronic key) used in the advance regulation method. Thus, when the data-collision detection method is employed or when the advance regulation method is employed but presence information is sent at UHF, the antenna 71 and the LF transmitter circuit 72 can be omitted.

The LF receiver circuit 74 converts the LF received by the antenna 73 to information in appropriate form, and provides it to the control circuit 79. The information received by the antenna 73 at LF indicates presence information that is sent at LF from the portable electronic key 2 itself or another portable electronic key 2 when the advance regulation method is employed.

The UHF transmitter circuit 76 transmits information provided from the control circuit 79 at UHF, via the antenna 75. The information provided from the control circuit 79 indicates an answer to the ECU 11 or presence information used in the advance regulation method.

The UHF receiver circuit 78 converts the UHF received by the antenna 77 to information in appropriate form, and provides it to the control circuit 79. The information received by the antenna 73 at UHF indicates presence information that is sent at UHF from the portable electronic key 2 itself or another portable electronic key 2 when the advance regulation method is employed. Thus, when the data-collision detection method is employed or when the advance regulation method is employed but presence information is sent at LF, the antenna 77 and the UHF transmitter circuit 78 can be omitted.

In summary, when the data-collision detection method is employed, the portable electronic key 2 has only to have the antenna 73, the LF receiver circuit 74, the antenna 75, and the UHF transmitter circuit 76. In this case, the antenna 71, the LF transmitter circuit 72, the antenna 77, and the UHF receiver circuit 78 can be omitted.

When the advance regulation method is employed and presence information is sent at LF, the portable electronic key 2 has only to have the antenna 71, the LF transmitter circuit 72, the antenna 73, the LF receiver circuit 74, the antenna 75, and the UHF transmitter circuit 76. In this case, the antenna 77 and the UHF receiver circuit 78 can be omitted.

In contrast, when the advance regulation method is employed and presence information is sent at UHF, the portable electronic key 2 has only to have the antenna 73, the LF receiver circuit 74, the antenna 75, the UHF transmitter circuit 76, the antenna 77, and the UHF receiver circuit 78. In this case, the antenna 71 and the LF transmitter circuit 72 can be omitted.

The control circuit 79 includes a storage section for storing various information and a microcomputer for controlling the entire portable electronic key 2 and necessary information processing (not shown). The storage section (not shown) includes, for example, an erasable nonvolatile memory, and more specifically, an EEPROM. The control circuit 79 basically executes the processes according to the flowcharts of Figs. 11 and 17.

The battery 80 basically constantly supplies power to the power consuming elements of the portable electronic key 2. In the example of Fig. 20, the power consuming elements are the LF transmitter circuit 72, the LF receiver circuit 74, the UHF transmitter circuit 76, the UHF receiver circuit 78, and the control circuit 79.

We have described an embodiment in which the series of processes (or part thereof) are executed with hardware.

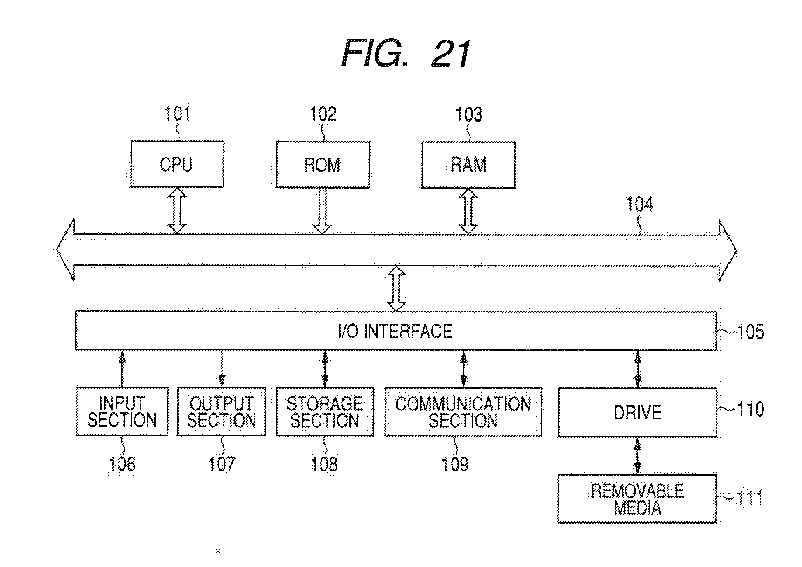

In contrast, when the series of processes (or part thereof) are executed with software, the ECU 11 or part thereof, or the portable electronic key 2 or part thereof can be configured by a computer as shown in Fig. 21.

Referring to Fig. 21, a central processing unit (CPU) 101 executes various processes according to the program stored in a read only memory (ROM) 102 or the program loaded into a random access memory (RAM) 103 from a storage section 108. The RAM 103 also holds data necessary for the CPU 101 to execute various processes as appropriate.

The CPU 101, the ROM 102, and the RAM 103 are connected together via a bus 104. The bus 104 also connects to an input/output interface 105.

The input/output interface 105 is connected to an input section 106 including a keyboard and a mouse, an output section 107 including a display, a storage section 108 including a hard disk, and a communicating section 109 including a modem and a terminal adapter. The communicating section 109 communicates with other units via a network including the Internet. The communicating section 109 also performs transmission and reception between the ECU 11 and the portable electronic key 2 via an antenna (not shown).

The input/output interface 105 is also connected to a drive 110 as necessary, through which removable media 111 including a magnetic disk, an optical disk, a magnetooptical disk, and a semiconductor memory. Computer programs read from the removable media 111 are installed in the storage section 108 as necessary.

To execute the series of processes with software, programs of the software are installed, via a network or from a recording medium, in a computer combined to dedicated hardware or a general-purpose personal computer which can execute various functions according to various programs installed therein.

As shown in Fig. 21, recording media including such programs include not only magnetooptical disks (including a floppy disk), optical disks (including a compact disc read-only memory (CD-ROM) and a digital versatile disk (DVD)), magnetooptical disks (including a mini disk (MD)), and the removable media (package media) 111 such as a semiconductor memory which are distributed to the user separately from the unit main body, but also the ROM 102 in which programs are recorded and a hard disk in the storage section 108 which are built in the unit main body in advance.

In this specification, the step of writing the programs recorded in the recording media includes not only processes executed in time sequence but also processes executed in parallel or individually.

The system incorporating the invention includes not only the above-described vehicle anti-theft system but also a radio communication system in which a specified one of a plurality of portable radio communication units is authenticated by a fixed radio communication unit. Here the system indicates the entire system including a plurality of processors and processing sections.

In the above example, the fixed radio communication unit is mounted to the vehicle 1 (a four-wheeled vehicle or a two-wheeled vehicle) as the ECU 11. It may be mounted to vehicles such as small airplanes, machines, devices, structures, and facilities. In the above example, operations after authentication are a door unlocking process and the like. Alternatively, for example, they may be unlocking or locking of anti-theft systems of trunks other than doors, activation or permission of the activation of components other than the engine, and other various actions. Examples of the components other than the engine include primary drives such as a motor, drive mechanisms such as a transmission, air conditioners, audio products, navigation systems, and lighting systems.

## Claims

1. A radio communication system in which a specified one of a plurality of portable radio communication units is authenticated by a fixed radio communication unit, wherein
the fixed radio communication unit sends a request for authentication;
each of one or more of the plurality of portable radio communication units that have received the request
transmits presence information for determining whether another portable radio communication unit that has received the request is present, wherein:
when it is determined that only the presence information of itself was received, each portable radio communication unit sends an answer to the request to the fixed radio communication unit; and
when it is determined that not only the presence information of itself but also presence information from another portable radio communication unit were received, each portable radio communication unit sets a response delay time by a specified setting method, and after a lapse of the response delay time, an answer to the request is sent to the fixed radio communication unit; and wherein
when the fixed radio communication unit received the answer from at least one of the one or more portable radio communication units that have received the request, the fixed radio communication unit authenticates the portable radio communication unit that has sent the answer.

2. A method for radio communication of a radio communication system in which a specified one of a plurality of portable radio communication units is authenticated by a fixed radio communication unit, wherein
the fixed radio communication unit sends a request for authentication;
each of one or more of the plurality of portable radio communication units that have received the request
transmits presence information for determining whether another portable radio communication unit that has received the request is present, wherein:
when it is determined that only the presence information of itself was received, each portable radio communication unit sends an answer to the request to the fixed radio communication unit; and
when it is determined that not only the presence information of itself but also presence information from another portable radio communication unit were received, each portable radio communication unit sets a response delay time by a specified setting method, and after a lapse of the response delay time, an answer to the request is sent to the fixed radio communication unit; and wherein
when the fixed radio communication unit received the answer from at least one of the one or more portable radio communication units that have received the request, the fixed radio communication unit authenticates the portable radio communication unit that has sent the answer.

3. A portable radio communication unit, wherein
a specified one of N (N is an integer larger than or equal to 2) portable radio communication units authenticated by a fixed radio communication unit comprises:
first receiving means configured to receive a request for authentication sent from the fixed radio communication unit;
first generating means configured to generate an answer to the request received by the first receiving means;
first transmitting means configured to send the answer generated by the first generating means to the fixed radio communication unit;
second generating means configured to generate presence information for determining the presence or absence of another portable radio communication unit that has received the request when the request is received by the first receiving means;
second transmitting means configured to transmit presence information generated by the second generating means;
second receiving means configured to receive the presence information; and
transmission control means configured to control transmission in such a manner that when only the presence information sent from the second transmitting means was received by the second receiving means, the answer is sent from the first transmitting means to the fixed radio communication unit, and when not only the presence information sent from the second transmitting means but also presence information from another portable radio communication unit were received by the second receiving means, a response delay time is set by a specified setting method, wherein when the response delay time has elapsed, the answer is sent from the first transmitting means to the fixed radio communication unit.

4. The portable radio communication unit according to Claim 3, wherein
when the presence information sent from the second transmitting means is normally received by the second receiving means, the transmission control means determines that only the presence information sent from the second transmitting means has been received; and
otherwise, the transmission control means determines that not only the presence information sent from the second transmitting means but also presence information sent from another portable radio communication unit were received by the second receiving means.

5. The portable radio communication unit according to Claim 3, wherein
the fixed radio communication unit is mounted in a vehicle, and sends the request at a low frequency (LF);
a plurality of the portable radio communication units are portable electronic keys for giving at least one of an instruction to unlock the door of the vehicle and an instruction to enable engine starting, the portable radio communication units sending the answer at an ultra high frequency (UHF);
the second transmitting means is a transmitter circuit for LF and sends the presence information at LF;
the second receiving means and the first receiving means are configured by a common receiver circuit for LF, the common LF receiver circuit receiving the presence information or the request sent at LF; and
the first transmitting means is a transmitter circuit for UHF, and sends the answer at UHF.

6. The portable radio communication unit according to Claim 3, wherein
the fixed radio communication unit is mounted in a vehicle, and sends the request at a low frequency (LF);
a plurality of the portable radio communication units are portable electronic keys for giving at least one of an instruction to unlock the door of the vehicle and an instruction to enable engine starting, the portable radio communication units sending the answer at an ultra high frequency (UHF);
the first receiving means is a receiver circuit for LF and receives the request sent at LF;
the first transmitting means and the second transmitting means are configured by a common transmitter circuit for UHF, the common UHF transmitter circuit transmitting the presence information or the answer at UHF; and
the second receiving means is a receiver circuit for UHF, and receives the presence information sent at UHF.

7. The portable radio communication unit according to Claim 3, wherein
when the transmission control means determines that the presence information from another portable radio communication unit was also received by the second receiving means, the first generating means generates the answer including information indicative of the presence of another portable radio communication unit.

8. A method for radio communication for a specified one of a plurality of portable radio communication units to be authenticated by a fixed radio communication unit, the method comprising the steps of:
upon reception of a request for authentication sent from the fixed radio communication unit,
transmitting presence information for determining whether another portable radio communication unit that has received the request is present, wherein
when it is determined that only the presence information of itself was received, transmitting an answer to the request to the fixed radio communication unit, and
when it is determined that not only the presence information of itself but also presence information from another portable radio communication unit were received, setting a response delay time by a specified setting method, and after a lapse of the response delay time, transmitting an answer to the request to the fixed radio communication unit.
